Europäisches Patentamt

European Patent Office

Office européen des brevets

(19)

(11)  **EP 0 763 415 A1**

(12)  **EUROPÄISCHE PATENTANMELDUNG**

(43) Veröffentlichungstag:
    **19.03.1997 Patentblatt 1997/12**

(51) Int. Cl.⁶: $B29C\ 45/42$, $B29C\ 45/72$

(21) Anmeldenummer: **96113711.4**

(22) Anmeldetag: **28.08.1996**

(84) Benannte Vertragsstaaten:
    **AT BE CH DE DK ES FR GB IT LI NL SE**

(30) Priorität: **07.09.1995 DE 19532969**

(71) Anmelder: **HERBST, Richard**
    **D-85386 Eching (DE)**

(72) Erfinder: **HERBST, Richard**
    **D-85386 Eching (DE)**

(74) Vertreter: **Witte, Alexander, Dr.-Ing. et al**
    **Witte, Weller, Gahlert, Otten & Steil,**
    **Patentanwälte,**
    **Rotebühlstrasse 121**
    **70178 Stuttgart (DE)**

(54)  **Verfahren und Vorrichtung zum Entformen von Spritzgegossenen Kunststofferzeugnissen aus einem Werkzeug einer Kunststoff-Spritzgiessmaschine**

(57)  Ein Verfahren und eine Vorrichtung dienen zum Entformen von spritzgegossenen Kunststofferzeugnissen (50') aus einem Werkzeug einer Kunststoff-Spritzgießmaschine. Das Kunststofferzeugnis (50') wird während einer vorbestimmten Verweildauer in einem Aufnahmeelement, insbesondere einem Greifer (30') gehalten. Während der Verweildauer des Kunststofferzeugnisses (50') im Aufnahmeelement findet ein Wärmeübergang vom Kunststofferzeugnis (50') zum Aufnahmelement statt. Das Kunststoffelement (50') wird im Aufnahmeelement über eine große Kontaktfläche (33') dauernd kraftschlüssig gehalten.

Fig. 3B

**Beschreibung**

Die Erfindung betrifft ein Verfahren zum Entformen von spritzgegossenen Kunststofferzeugnissen aus einem Werkzeug einer Kunststoff-Spritzgießmaschine, bei dem das Kunststofferzeugnis nach dem Entformen aus dem Spritzwerkzeug während einer vorbestimmten Verweildauer in einem Aufnahmeelement dauernd kraftschlüssig gehalten wird und während der Verweildauer des Kunststofferzeugnisses im Aufnahmeelement ein Wärmeübergang über eine große Kontaktfläche vom Kunststofferzeugnis zum Aufnahmeelement stattfindet.

Die Erfindung betrifft ferner eine Vorrichtung zum Entformen von spritzgegossenen Kunststofferzeugnissen aus einem Werkzeug einer Kunststoff-Spritzgießmaschine, mit einem Aufnahmeelement mit einer großen Kontaktfläche zum kraftschlüssigen Halten des Kunststofferzeugnisses für eine vorbestimmte Verweildauer, wobei während der Verweildauer des Kunststofferzeugnisses im Aufnahmeelement ein Wärmeübergang zwischen dem Kunststofferzeugnis und dem Aufnahmeelement stattfindet.

Ein Verfahren und eine Vorrichtungen der vorstehend genannten Art sind aus der DE-U-94 02 931 bekannt.

Beim Spritzgießen von Kunststofferzeugnissen wird, wie z.B. aus der EP-B1-0 266 804 oder der DE-A1-40 03 371 bekannt, der Kunststoff in flüssigem oder plastischem Zustand in die Formhohlräume des Werkzeugs eingespritzt. Der eingespritzte flüssige bzw. plastische Kunststoff erkaltet dann zumindest teilweise und zunächst an den Oberflächen des Erzeugnisses. Die in den Erzeugnissen gespeicherte Wärme wird über die Oberfläche abgeleitet, so daß das Erzeugnis insgesamt abgekühlt wird. Beim anschließenden Öffnen des Werkzeugs und Entformen der Erzeugnisse mittels Auswerferstiften und beim anschließenden Entnehmen mittels eines geeigneten Handlingsystems sind die Erzeugnisse immer noch relativ warm. Die Erzeugnisse sind dabei um so kühler, je länger die Abkühlzeit ist. Es ist daher eine Frage der Wirtschaftlichkeit, wie weit man die Erzeugnisse abkühlen läßt. Da man andererseits bestrebt ist, die Zykluszeiten von Kunststoff-Spritzgießmaschinen so niedrig wie möglich zu halten, ist es erforderlich, die Erzeugnisse so schnell wie möglich auszuformen, d.h. bei der gerade noch möglichen Temperatur bzw. dem noch möglichen Zustand. Darunter ist vor allem die Steifigkeit des Erzeugnisses bei der jeweiligen Temperatur zu verstehen. Die Steifigkeit muß ausreichend groß sein, damit das Erzeugnis nach dem Entnehmen mechanisch belastet werden kann, z.B. in einem Greifer, einer Verpackungsmaschine oder dergleichen.

Sind die entformten Erzeugnisse jedoch noch zu warm, kann es zu verschiedenen negativen Folgen kommen. So können die zu warm entformten Erzeugnisse infolge ihrer noch zu geringen mechanischen Stabilität unbeabsichtigt verformt werden, und es ist sogar möglich, daß die im Inneren eines Erzeugnisses gespeicherte Wärme an die Oberfläche des Erzeugnisses zurück wandert, so daß die bereits erstarrte Oberfläche wieder erweicht wird. Die Temperatur kann dann an der Oberfläche wieder höhere Werte als zum Zeitpunkt des Entformens annehmen. Dies gilt um so mehr je dickwandiger die Kunststoffteile sind, da die benötigte Kühlzeit mit zunehmender Wandstärke exponentiell ansteigt.

Wenn zu viel Wärme zu lange in den Erzeugnissen gespeichert bleibt, beeinträchtigt dies nicht nur die mechanische Stabilität. Es stellen sich auch Probleme beim Verpacken, insbesondere beim gestapelten Verpacken dünner Erzeugnisse, ein. Eine zu lange Wärmespeicherung führt auch zum Schrumpfen der Erzeugnisse.

In diesem Zusammenhang ist das bereits erwähnte Problem der Schwindung, d.h. der Volumenkontraktion, bei der Abkühlung der Kunststofferzeugnisse besonders störend.

Wenn die Kunststofferzeugnisse während des Entformens von einem Greifer erfaßt werden und/oder nach dem Entformen in einem Aufnahmeelement einer nachgeschalteten Kühlstation gehalten werden, kann die Schwindung der Kunststofferzeugnisse dazu führen, daß sich ein Luftspalt zwischen dem kälter werdenden Kunststofferzeugnis und der jeweiligen Kontaktfläche des betreffenden Aufnahmeelementes am Greifer oder in der Kühlstation ausbildet. Ein derartiger Luftspalt führt jedoch zu einer starken Verschlechterung des Wärmeüberganges vom Kunststofferzeugnis zu dem betreffenden Aufnahmeelement.

Aus der EP 0 266 804 B1 ist eine Trageinrichtung zum Halten und Kühlen eines noch warmen Vorformlings bekannt. Der Vorformling hat die Gestalt einer tubenartigen Röhre mit einem vorderen, offenen Ende und einem hinteren, geschlossenen Ende. Der Vorformling wird in einer Kunststoff-Spritzgießmaschine hergestellt und anschließend in die Trageinrichtung überführt. Die Trageinrichtung hat einen Aufnahmeraum, der geringfügig konisch ausgebildet ist. Der Vorformling wird mit dem geschlossenen hinteren Ende voran in den Aufnahmeraum eingeführt. Oberhalb des Vorformlings wird nun ein Unterdruck erzeugt, so daß der Vorformling in den Aufnahmeraum hineingezogen wird. Der Vorformling liegt mit seiner zylindrischen Umfangsfläche an der geringfügig konischen Gegenfläche des Aufnahmeraumes an. Diese Gegenfläche wird mittels einer Kühleinrichtung gekühlt. Wenn der Vorformling unter der Wirkung der Kühleinrichtung schrumpft, gleitet er wegen der geringfügig konischen Form des Aufnahmeraumes selbsttätig immer weiter in diesen hinein, solange der Unterdruck anliegt.

Die bekannte Vorrichtung hat den Nachteil, daß die Kühlwirkung nicht exakt eingestellt werden kann, weil die Konstitution des warmen und noch relativ weichen Vorformlings undefiniert ist. Wenn der Vorformling zu warm und damit zu weich ist, können Fehlfunktionen auftreten, weil der Vorformling sich zu stark verformt und/oder an den Wänden kleben bleibt. Wenn der Vorformling hingegen zu kalt und damit zu steif ist, stellt sich aufgrund der Konizität der Innenoberfläche des Aufnahmeraums nur ein schlechter Wärmeübergang ein.

Aus der eingangs genannten DE-U-94 02 931 ist eine Vorrichtung zur Entnahme von Spritzgußteilen aus einem Spritzgußwerkzeug bekannt.

Bei der bekannten Vorrichtung werden zur Entnahme von frisch gespritzten Kunststoffteilen, insbesondere CD-Boxen, Greiferplatten eingesetzt, die zugleich als Kühlplatten dienen. Die Greiferplatten sind senkrecht zu ihrer Oberfläche mit Durchgangsbohrungen versehen, in denen Sauggreifer laufen. Zu Beginn des Entnahmevorganges werden die Sauggreifer vorgefahren und ergreifen die frisch gespritzten Kunststoffteile. Durch Zurückfahren der Sauggreifer werden die Teile gegen die Oberfläche der Greiferplatten gedrückt. Dies entspricht einer kraftschlüssigen Halterung. Da die Greiferplatten an ihrer Oberfläche komplementär zu den zu entnehmenden Kunststoffteilen ausgebildet sind, entsteht ein guter Wärmeübergang. Die Greiferplatten sind mittels Kühlkanälen gekühlt. Die Kühlung wird jedoch nur auf einer Oberfläche des entnommenen Teils wirksam. Dadurch ist eine längere Kühlzeit erforderlich. Bei der bekannten Vorrichtung wird dieser Nachteil dadurch ausgeglichen, daß jedes Greifersystem über eine doppelt so große Anzahl von Greiferplatten verfügt, wie dies der Anzahl der im Werkzeug vorhandenen Formnester entspricht. Auf diese Weise wird bei einem Entnahmevorgang mit der einen Hälfte der Greiferplatten gearbeitet und beim nächsten Entnahmevorgang mit der anderen Hälfte der Greiferplatten. Demzufolge beträgt die Verweilzeit der Kunststofferzeugnisse an den Greiferplatten jeweils das doppelte der Entnahmezykluszeit. Auf diese Weise wird zwar die Verweilzeit der Teile an der Greiferplatte verdoppelt und damit die Kühlwirkung verbessert, allerdings unter Inkaufnahme eines erheblichen mechanischen Aufwandes.

Der Erfindung liegt daher die Aufgabe zugrunde, ein Verfahren und eine Vorrichtung der eingangs genannten Art dahingehend weiterzubilden, daß der Wärmeübergang auch bei einer Schwindung des sich abkühlenden Kunststofferzeugnisses optimal erhalten bleibt.

Diese Aufgabe wird bei einem Verfahren der eingangs genannten Art erfindungsgemäß dadurch gelöst, daß bei einer Schwindung des Kunststofferzeugnisses infolge dessen Abkühlung im Aufnahmeelement die betreffende Kontaktfläche entsprechend der Schwindung nachgestellt wird.

Die Aufgabe wird ferner bei einer Vorrichtung der eingangs genannten Art erfindungsgemäß dadurch gelöst, daß bei einer Schwindung des Kunststofferzeugnisses infolge dessen Abkühlung im Aufnahmeelement die betreffende Kontaktfläche entsprechend der Schwindung nachstellbar ist.

Die der Erfindung zugrunde liegende Aufgabe wird auf diese Weise vollkommen gelöst.

Dadurch, daß in an sich bekannter Weise über eine große Kontaktfläche dauernd ein Kraftschluß zwischen Aufnahmeelement und Kunststofferzeugnis aufrechterhalten wird, bleibt der physische Kontakt erhalten, so daß der Wärmeübergang ebenfalls unverändert bleibt. Die im Erzeugnis gespeicherte Wärme wird damit besser auf das Erzeugnis und das Aufnahmeelement verteilt. Im Gegensatz zum Stand der Technik wird jedoch bei einer Schwindung des sich abkühlenden Kunststofferzeugnisses die entsprechende Kontaktfläche des Aufnahmeelementes entsprechend nachgestellt. Der Nachstellweg der Kontaktfläche ergibt sich dabei aus der zugehörigen Volumenkontraktion des Kunststofferzeugnisses. Die Aufrechterhaltung eines flächigen Kraftschlusses ist damit die Folge einer derartigen Nachstellbewegung der Kontaktfläche des Aufnahmeelementes.

Auf diese Weise wird somit sicher vermieden, daß es zu einem Luftspalt zwischen der Kontaktfläche und dem Kunststofferzeugnis kommt, so daß der Wärmeübergang dauernd aufrechterhalten bleibt und sich das Kunststofferzeugnis auf diese Weise kontrolliert und schnell abkühlen kann.

Bei einer bevorzugten Weiterbildung des erfindungsgemäßen Verfahrens wird ein vorbestimmter Anpreßdruck des Kraftschlusses eingestellt, insbesondere wird der Anpreßdruck erhöht, wenn das Erzeugnis sich abkühlt.

Diese Maßnahme hat den Vorteil, daß der Wärmeübergang nicht nur qualitativ, d.h. überhaupt, sondern auch quantitativ, d.h. in seinem Ausmaß, geregelt aufrechterhalten werden kann.

Die Kontaktfläche wird vorzugsweise durch eine Membran gebildet, wobei die Membran mittels Fremdkraft auslenkbar ist. Hierfür steht wahlweise eine mechanische Kraft oder eine fluidische Kraft, insbesondere eine hydraulische Kraft, zur Verfügung.

Diese Maßnahmen haben den Vorteil, daß mit einer Vielzahl von Varianten der erstrebte Kraftschluß aufrechterhalten werden kann, wobei je nach Art der Aufbringung der Fremdkraft an sich bekannte Stelleinrichtungen eingesetzt werden können.

Bei bevorzugten Weiterbildungen des erfindungsgemäßen Verfahrens wird der Anpreßdruck über die Kontaktfläche nach einem vorgegebenen geometrischen oder räumlichen Profil eingestellt. Im Falle der Verwendung einer Membran ist zu diesem Zweck vorzugsweise zum Erzeugen eines derartigen vorgegebenen Profils des Anpreßdrucks am Kunststofferzeugnis über die Kontaktfläche die Membran mit einem vorgegebenen Dickenprofil ausgebildet.

Diese Maßnahme hat den Vorteil, daß einerseits einer nichtkonstanten Wandstärke des Kunststofferzeugnisses Rechnung getragen werden kann, andererseits kann aber auch während des Abkühlungsvorganges eine definierte Formgebung des sich abkühlenden Kunststofferzeugnisses erreicht werden.

Im Falle der Verwendung einer Membran besteht diese vorzugsweise aus Metall, sie kann aber auch aus einem Kunststoff bestehen, insbesondere dann, wenn der Kunststoff mit Partikeln eines gut wärmeleitenden Materials versehen ist.

Auf diese Weise läßt sich den unterschiedlichsten konstruktiven Gegebenheiten Rechnung tragen.

Bevorzugt wird die Membran so ausgebildet, daß sie in gut wärmeleitendem Kontakt mit einem Abschnitt des Aufnahmeelementes hoher Wärmekapazität steht.

Die Maßnahme hat den Vorteil, daß die vom Kunststofferzeugnis abströmende Wärme schnell an diesen Abschnitt weitergeleitet werden kann.

Zusätzlich oder alternativ ist es aber auch möglich, die Membran mit einem Kühlmittel anzuströmen, beispielsweise einer Flüssigkeit oder einem Gas.

Diese Maßnahme hat den Vorteil, daß eine unmittelbare und effektive Wärmeabfuhr an der Membran selbst möglich ist.

Wie bereits erwähnt wurde, kann das Aufnahmeelement für das Kunststofferzeugnis vorzugsweise ein Greifer sein, mit dem das Kunststofferzeugnis aus dem Werkzeug entnommen wird. Alternativ oder zusätzlich kann das Aufnahmeelement aber auch eine der Kunststoff-Spritzgießmaschine nachgeschaltete Kühlstation sein.

Die Erfindung ist für Kunststofferzeugnisse aller Art einsetzbar. Sie eignet sich insbesondere für rotationssymmetrische Kunststofferzeugnisse, die mit Hilfe eines gekühlten Greifers und/oder einer gekühlten Aufnahme in der Kühlstation ganz oder im Bereich von Materialanhäufungen partiell gekühlt werden. Ein bevorzugtes Anwendungsgebiet der Erfindung sind Verschlüsse aus Kunststoff und dickwandige Kunststoff-Formteile.

Weitere Vorteile ergeben sich aus der Beschreibung der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1    eine äußerst schematisierte Draufsicht auf eine Kunststoff-Spritzgießmaschine, bei der die vorliegende Erfindung eingesetzt werden kann;

Fig. 2A und 2B    eine schematisierte Detailansicht eines Greifers zum Entformen von Kunststofferzeugnissen nach dem Stand der Technik;

Fig. 3A und 3B    eine Darstellung ähnlich Fig. 2A und 2B, jedoch zur Erläuterung der Erfindung;

Fig. 4    eine Teilansicht zur Erläuterung einer Möglichkeit der Wärmeabfuhr an einer eine Kontaktfläche bildenden Membran;

Fig. 5    in weiter vergrößertem Maßstab eine Darstellung ähnlich Fig. 4, zur Erläuterung einer weiteren Variante der Erfindung;

Fig. 6    eine weitere Darstellung, ähnlich den Figuren 4 und 5 zur Erläuterung noch eines Ausführungsbeispiels der Erfindung; und

Fig. 7    eine Darstellung, ähnlich Fig. 3a, jedoch für ein anderes Ausführungsbeispiel der Erfindung.

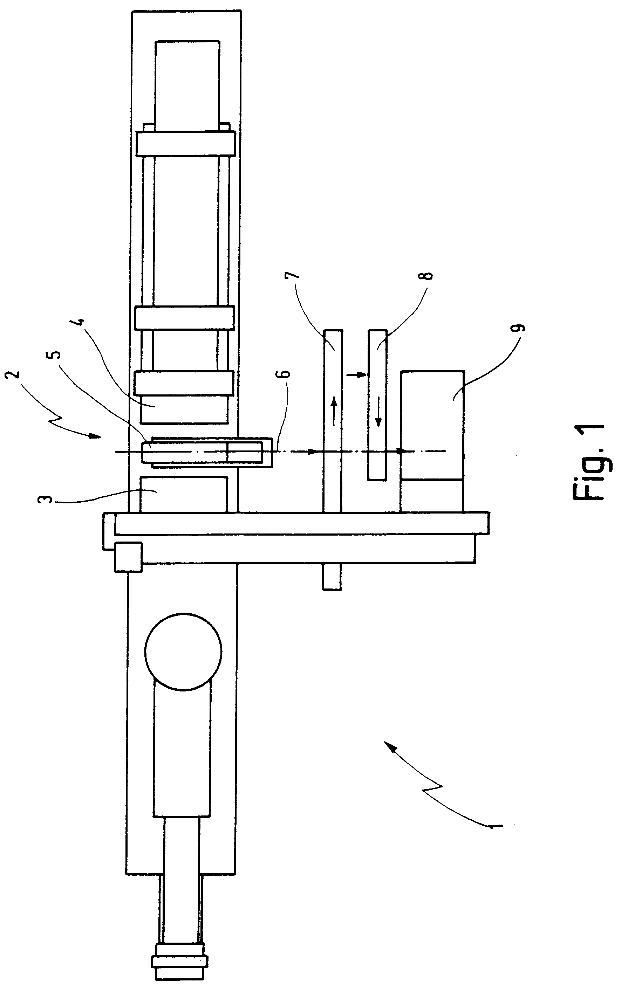

In Fig. 1 bezeichnet 1 insgesamt eine äußerst schematisch dargestellte Kunststoff-Spritzgießmaschine von an sich bekannter Bauart. Auf die Schilderung der üblichen Komponenten, beispielsweise des Extruders, der Hydraulik und dergleichen, kann aus diesem Grunde verzichtet werden. Einzelheiten einer derartigen Kunststoff-Spritzgießmaschine sind z.B. in der DE 42 19 924 A1 beschrieben.

Die Kunststoff-Spritzgießmaschine 1 verfügt über ein sogenanntes Etagenwerkzeug 2, das im wesentlichen aus zwei Werkzeughälften 3, 4 sowie einem dazwischen angeordneten sogenannten Mittelpaket 5 besteht.

Entlang einer radial zur Längserstreckung der Maschine 1 verlaufenden Achse 6 ist ein Handlingsystem (nicht dargestellt) wirksam, mit dem die in der Maschine 1 erzeugten Kunststofferzeugnisse nach dem Öffnen des Werkzeugs 2 entformt werden können.

Unmittelbar benachbart zum Mittelpaket 5 ist als Kühlstation ein Abkühlband 7 angeordnet und dazu parallel ein Stapelband 8, das sich wiederum neben einer Verpackungsstation 9 befindet.

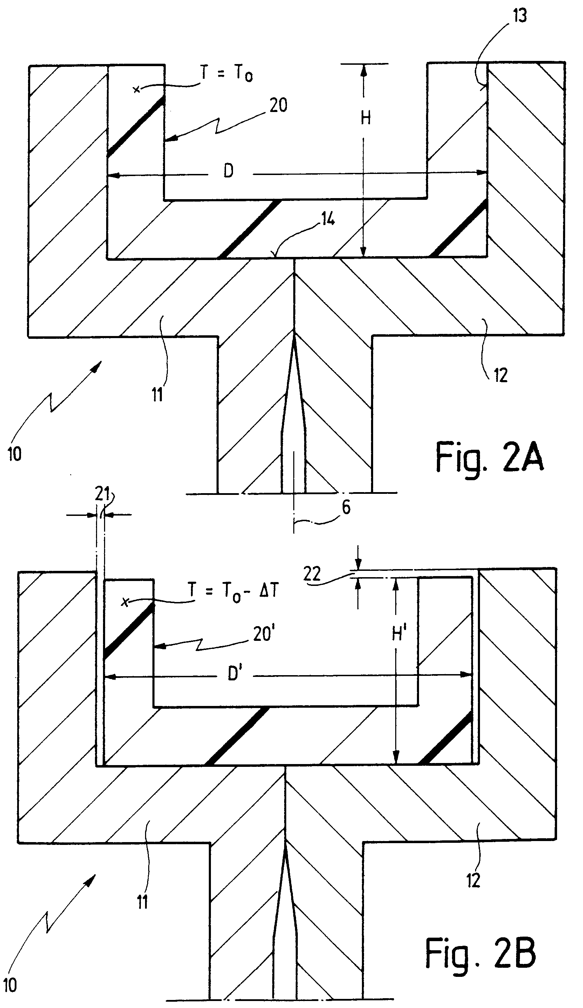

Fig. 2 zeigt einen Greifer 10, der z.B. entlang der Achse 6 gemäß Fig. 1 verfahrbar ist, um Kunststofferzeugnisse aus dem Werkzeug 2 zu entformen.

Der Greifer 10 umfaßt zwei schematisch angedeutete Greiferhälften 11, 12, die eine Innenumfangs-Kontaktfläche 13 sowie eine radiale Innen-Kontaktfläche 14 bilden, wenn sie in der in Fig. 2A dargestellten Weise zusammengeführt sind.

Der Greifer 10 hält mit seinen Greiferhälften 11, 12 ein Kunststofferzeugnis 20 von rotationssymmetrischer Bauart, beispielsweise ein Verschluß aus Kunststoff.

Das Kunststofferzeugnis 20 hat in der Darstellung der Fig. 2A einen Außendurchmesser D und eine Höhe H. Im dargestellten Zustand habe es eine Temperatur $T = T_0$, das ist die Temperatur, mit der das Kunststofferzeugnis 20 aus dem Werkzeug 2 entformt wurde.

Durch die Aufnahme des Kunststofferzeugnisses 20 in den Greiferhälften 11, 12 entsteht ein Wärmeübergang an den Kontaktflächen 13 und 14. Der Wärmeübergang führt zu einer Wärmeabfuhr aus dem Kunststofferzeugnis 20 in die Greiferhälften 11 und 12. Infolge der Temperaturverminderung tritt eine Volumenkontraktion, eine sogenannte Schwindung ein. Dies ist in Fig. 2B dargestellt. Man erkennt deutlich, daß der Außendurchmesser sich von D auf D' und die Höhe sich von H auf H' vermindert hat, weil die Temperatur nunmehr $T = T_0 - \Delta T$ beträgt. Das geschrumpfte Kunststofferzeugnis 20' ist daher an der Innenumfangs-Kontaktfläche 13 von den Greiferhälften 11, 12 über einen Luftspalt 21 getrennt, wobei auch in der Höhe H' ein entsprechender Abstand 22 entstanden ist. Es liegt auf der Hand, daß auf diese Weise der Wärmeübergang zum Greifer 10 drastisch vermindert wurde, und auch die mechanische Halterung des Kunststofferzeugnisses 20' im Greifer 10 hat sich auf diese Weise verschlechtert.

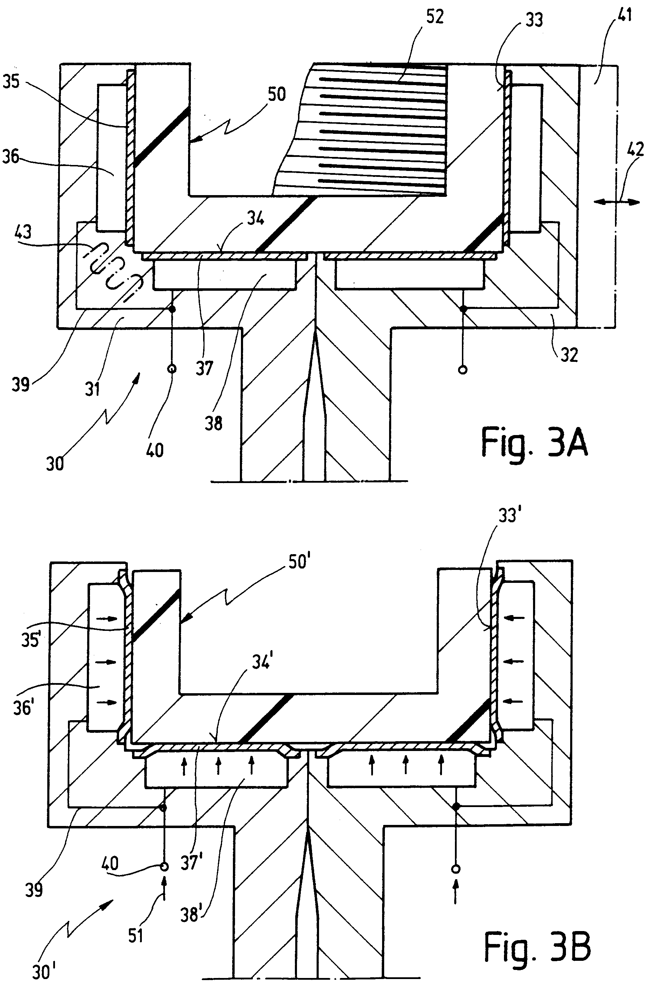

In den Figuren 3A und 3B ist demgegenüber dargestellt, wie diesen Problemen erfindungsgemäß begegnet werden kann.

Wie man leicht erkennt, hat der in den Figuren 3A und 3B gezeigte Greifer 30 eine ähnliche Grundstruktur wie der Greifer 10 gemäß den Figuren 2A und 2B. Er umfaßt wiederum Greiferhälften 31, 32, die eine Innenumfangs-Kontaktfläche 33 sowie eine radiale Innen-Kontaktfläche 34 bilden.

Im Gegensatz zum Stand der Technik gemäß Figuren 2A und 2B ist jedoch die Innenumfangs-Kontaktfläche 33 mit einer Umfangsmembran 35 versehen, hinter der sich ein Druckraum 36 befindet. In entsprechender Weise ist auch die radiale Innen-Kontaktfläche 34 mit einer radialen Membran 37 und einem zugehörigen Druckraum 38 versehen. Die Membranen 35, 37 und die Druckräume 36 bzw. 38 können selbstverständlich jeweils auch abschnittsweise ausgebildet sein.

Ein Leitungssystem 39 verbindet die Druckräume 36, 38 mit einem Anschluß 40, über dem ein Fluid, beispielsweise eine Hydraulikflüssigkeit oder ein Gas zugeführt werden können.

Der Greifer 30 hält ein Kunststofferzeugnis 50 von gleicher Bauart wie das Kunststofferzeugnis 20 gemäß Figuren 2A und 2B. Das Kunststofferzeugnis 50 ist vorzugsweise eine Schraubkappe zum Verschließen von Behältern. Mit 53 ist ein Innengewinde der Schraubkappe angedeutet.

Wenn das mit verhältnismäßig hoher Temperatur aufgenommene Kunststofferzeugnis 50 sich durch Wärmeabgabe an den Greifer 30 abkühlt, tritt wiederum eine Schrumpfung ein, wie mit 50' in Fig. 3B angedeutet. Auch die übrigen Bestandteile der Vorrichtung sind in Fig. 3B jeweils mit einem Apostroph versehen, sofern sich eine Veränderung gegenüber Fig. 3A bei der Abkühlung des Kunststofferzeugnisses 50 zu 50' einstellt.

Um der Schwindung des Kunststofferzeugnisses 50 nach 50' zu begegnen, werden die Druckräume 36' und 38' über den Anschluß 40 mit einem fluiden Druckmedium beaufschlagt, wie mit einem Pfeil 51 angedeutet. Infolge des sich in den Druckräumen 36, 38 einstellenden Überdrucks wird, wie mit Pfeilen angedeutet, eine Kraft auf die Membranen ausgeübt, die sich nunmehr nach außen verformen, wie mit 35' und 37' eingezeichnet. Das Maß der Verformung der Membranen 35', 37' richtet sich dabei nach dem Ausmaß der Schwindung des Kunststofferzeugnisses 50'.

Wie man deutlich aus Fig. 3B erkennen kann, bleibt auf diese Weise der Kraftschluß zwischen den Kontaktflächen 33, 34 bzw. 33', 34' und dem Kunststofferzeugnis 50 bzw. 50' dauernd erhalten. Das Kunststofferzeugnis 50' kann daher auch im geschrumpften Zustand weiterhin über die gesamten Kontaktflächen 33' und 34' Wärme an den Greifer 30' abgeben.

Zur Auslenkung der Membranen 35, 37 kann sowohl Überdruck wie auch Unterdruck in den Druckräumen 36, 38 eingesetzt werden. So ist es beispielsweise auch möglich, zunächst einen Unterdruck in den Druckräumen 36, 38 zu erzeugen, bevor das Kunststofferzeugnis 50 aufgenommen wird, wobei die Verhältnisse so gewählt werden, daß das Kunststofferzeugnis 50 im Zustand hoher Temperatur gerade in die auf diese Weise vergrößerte Aufnahmeöffnung des Greifers 30 paßt. Wird nun der Unterdruck entspannt, kehren die Membranen 35, 37 langsam in ihre Ausgangsstellung zurück und folgen damit der Schrumpfungsbewegung der Randflächen des Kunststofferzeugnisses 50'.

Aus dem Vorstehenden folgt, daß durch eine entsprechende Steuerung des Drucks beliebige Schrumpfungsvorgänge der Kunststofferzeugnisse kompensiert werden können.

Es versteht sich dabei ferner, daß es im vorliegenden Fall darauf ankommt, einen Kraftschluß zwischen dem Kunststofferzeugnis 50 und dem Greifer 30 im Bereich der großflächigen Kontaktflächen 33, 34 während des gesamten Schrumpfungsprozesses des Kunststofferzeugnisses 50 aufrechtzuerhalten. Aus diesem Grunde können statt fluidisch betätigter Membranen selbstverständlich auch mechanisch betätigte Membranen eingesetzt werden. Auch verschiebbare starre Wände und dergleichen sind einsetzbar, sofern nur der Kraftschluß mit entsprechendem Anpreßdruck und damit der gute Wärmeübergang vollflächig erhalten bleibt.

Zur Verbesserung der Wärmeabfuhr kann der Greifer 30 gekühlt werden. Dies kann z.B. mit externen Kühlelementen 41 geschehen, die außen auf den Greifer 30 aufgesetzt werden, wie mit einem Pfeil 42 angedeutet. Die Kühlelemente 41 werden von Zeit zu Zeit ausgetauscht, sobald ihre Kühlwirkung stark nachläßt. Sie werden dann in einem Kühlaggregat (nicht dargestellt) wieder "aufgeladen". Alternativ oder zusätzlich kann der Greifer 30 auch mit einem internen Kühlsystem 43 versehen werden.

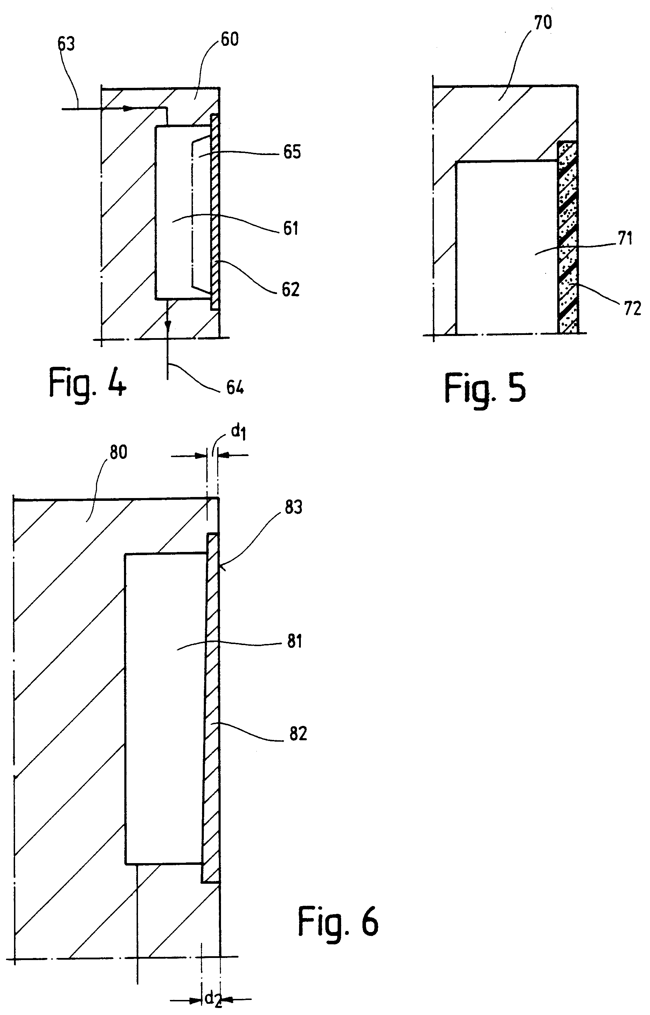

Bei der in Fig. 4 dargestellten Variante ist eine Greiferhälfte 60 mit einem Druckraum 61 versehen, der wiederum mit einer Membran 62 nach außen abgeschlossen ist.

In Ergänzung zum bislang geschilderten Ausführungsbeispiel gemäß den Figuren 3A und 3B ist der Druckraum 61 nicht nur an eine einfache Druckmittelleitung angeschlossen, sondern vielmehr an eine Zuleitung 63 sowie eine Ableitung 64.

Auf diese Weise wird ein einstellbarer Durchsatz des Druckmediums im Druckraum 61 erreicht, so daß eine erhöhte Wärmeabfuhr von der Rückseite der Membran 62 her möglich ist, unabhängig von dem jeweils im Druckraum 61 eingestellten Betätigungsdruck.

Zur Erhöhung der Wärmeabfuhr kann die Membran 62 mit Wärmetauschrippen 65 versehen sein, die vom Druckmittel umströmt werden.

Bei der in Fig. 5 dargestellten Variante weist eine Greiferhälfte 70 wiederum einen Druckraum 71 mit abschließender Membran 72 auf.

Das Besondere dabei besteht darin, daß statt der in den bisherigen Ausführungsbeispielen verwendeten metallischen Membranen nunmehr eine Membran 72 aus Kunststoff eingesetzt wird. Die Membran 72 kann zu diesem Zweck mit einem Zusatz von Partikeln eines gut wärmeleitenden Materials, beispielsweise Kupfer, versehen sein.

Fig. 6 zeigt ein weiteres Ausführungsbeispiel der Erfindung mit einer Greiferhälfte 80. Die Greiferhälfte 80 ist mit einem Druckraum 81 versehen, der wiederum von einer Membran 82 geschlossen wird. Die Außenseite der Membran 82 bildet zugleich wiederum eine Kontaktfläche 83.

Wie man deutlich aus Fig. 6 erkennen kann, ist die Dicke, d.h. die Wandstärke der Membran 82, nicht gleichförmig. Sie variiert vielmehr von einem minimalen Betrag $d_1$ am oberen Ende der Fig. 6 zu einem maximalen Betrag $d_2$ am unteren Ende. Selbstverständlich können auch andere Dickenprofile eingesetzt werden.

Der Sinn dieser Maßnahme ist einerseits, daß auf diese Weise ein definierter Wärmeübergang in bestimmten Bereichen der Kontaktfläche 83 erreicht werden kann, weil in dünneren Bereichen der Membran 82 die Wärme besser abfließt als in dickeren Bereichen. Ein weiterer Sinn der Maßnahme liegt darin, daß bei einem gleichförmigen Druck im Druckraum 81 die Membran 82 im dünneren Bereich stärker verformt wird als im dickeren Bereich. Man kann auf diese Weise eine gezielte Formgebung des sich abkühlenden Kunststofferzeugnisses erreichen.

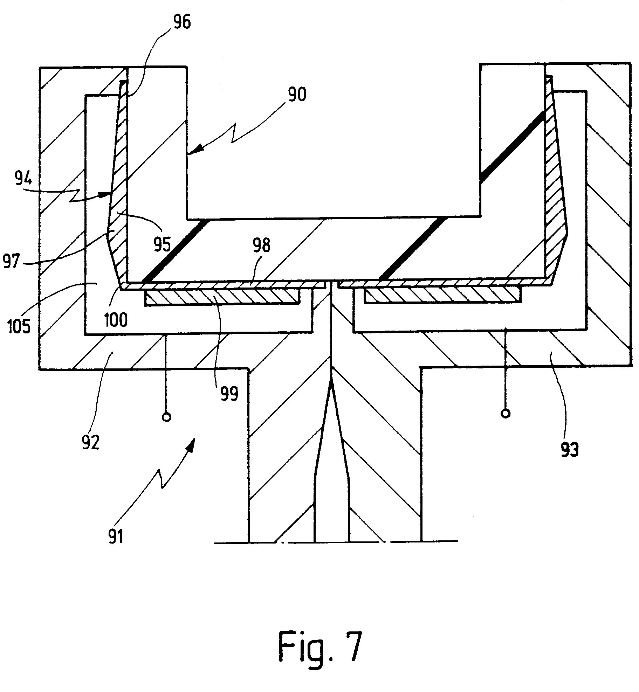

Bei dem in Fig. 7 dargestellten Ausführungsbeispiel ist mit 90 wiederum ein Kunststofferzeugnis der bereits beschriebenen Art bezeichnet. Ein Greifer 91 umfaßt wieder zwei Greiferhälften 92, 93.

Im Unterschied zu den bisher geschilderten Ausführungsbeispielen, insbesondere dem nach Fig. 3A und 3B, ist der Greifer 91 gemäß Fig. 7 in beiden Greiferhälften 92, 93 mit einer durchgehenden Membran 94 versehen. Die Membran 94 umfaßt einen Umfangsabschnitt 95. Der Umfangsabschnitt 95 ist mit einem relativ dünnen Rand 96 und einer verdickten Mitte oder Rippe 97 versehen. Ein Radialabschnitt 98 ist mit einer Verstärkungsplatte 99 ausgestattet. Wie man deutlich sieht, reicht die Membran 94 um die Ecke 100 herum, die zwischen dem Radialabschnitt 98 und dem Umfangsabschnitt 95 vorhanden ist.

Ein Druckraum 105 umgibt die Membran 94 gesamthaft, d.h. er wirkt auf den Umfangsabschnitt 95 sowie den Radialabschnitt 98.

Wenn das noch warme und verhältnismäßig weiche Kunststofferzeugnis 90 vom Greifer 91 aufgenommen wird, so legt sich die Membran 94 mit dem Umfangsabschnitt 95 sowie dem Radialabschnitt 98 an den Umfang bzw. den Boden des Kunststofferzeugnisses 90 an, wie bereits beschrieben wurde.

Wenn nun Druck im Druckraum 105 erzeugt wird, so verformt sich der dünne Rand 96 des Umfangsabschnittes 95 besonders, weil aufgrund der geringen Dicke die Auslenkung besonders groß ist. Dies bedeutet, daß das Kunststofferzeugnis 90 zunächst und vor allem am oberen und äußeren Umfang gehalten wird. Wenn sich bei weiterer Erhöhung des Drucks dann auch der Radialabschnitt 98 an den Boden des Kunststofferzeugnisses 90 anlegt, so kann das Kunststofferzeugnis 90 nicht mehr in der Darstellung der Fig. 7 nach oben aus dem Greifer 91 ausweichen.

Die Verstärkungsplatte 99 hat dabei den Sinn, daß der Boden des Kunststofferzeugnisses 90 besonders eben ausgebildet werden soll. Eine Wölbung oder sonstwie unebene Verformung der Membran 94 ist damit ausgeschlossen.

**Patentansprüche**

1. Verfahren zum Entformen von spritzgegossenen Kunststofferzeugnissen (20; 50; 90) aus einem Werkzeug (2) einer Kunststoff-Spritzgießmaschine (1), bei dem das Kunststofferzeugnis (20; 50; 90) nach dem Entformen aus dem Spritzwerkzeug während einer vorbestimmten Verweildauer in einem Aufnahmeelement dauernd kraftschlüssig gehalten wird und während der Verweildauer des Kunststofferzeugnisses (20; 50; 90) im Aufnahmeelement ein Wärmeübergang über eine große Kontaktfläche (33, 34; 83) vom Kunststofferzeugnis (20; 50; 90) zum Aufnahmeelement stattfindet, dadurch gekennzeichnet, daß bei einer Schwindung des Kunststofferzeugnisses (20; 50; 90) infolge dessen Abkühlung im Aufnahmeelement die betreffende Kontaktfläche (33; 83) entsprechend der Schwindung nach gestellt wird.

2. Verfahren nach Anspruch 1, dadurch gekennzeichnet, daß ein vorbestimmter Anpreßdruck des Kraftschlusses eingestellt wird, insbesondere derart, daß der Anpreßdruck erhöht wird, wenn das Kunststofferzeugnis (20; 50; 90) sich abkühlt.

3. Verfahren nach Anspruch 2, dadurch gekennzeichnet, daß der Anpreßdruck über die Kontaktfläche (83) nach einem vorgegebenen Profil eingestellt wird.

4. Verfahren nach einem oder mehreren der Ansprüche 1 - 3, dadurch gekennzeichnet, daß das Kunststofferzeugnis (20; 50; 90) mittels eines Greifers (10; 30; 91) aus dem Werkzeug (2) entnommen wird und der Greifer (10; 30; 91) das Aufnahmeelement bildet.

5. Verfahren nach einem oder mehreren der Ansprüche 1 - 3, dadurch gekennzeichnet, daß das Kunststofferzeugnis (20; 50; 90) nach dem Entformen einer Kühlstation (7) zugeführt wird und daß die Kühlstation (7) das Aufnahmeelement bildet.

6. Vorrichtung zum Entformen von spritzgegossenen Kunststofferzeugnissen (20; 50; 90) aus einem Werkzeug (2) einer Kunststoff-Spritzgießmaschine (1), mit einem Aufnahmeelement mit einer großen Kontaktfläche (33, 34; 83) zum kraftschlüssigen Halten des Kunststofferzeugnisses (20; 50; 90) für eine vorbestimmte Verweildauer, wobei während der Verweildauer des Kunststofferzeugnisses (20; 50; 90) im Aufnahmeelement ein Wärmeübergang zwischen dem Kunststofferzeugnis (20; 50; 90) und dem Aufnahmeelement stattfindet, dadurch gekennzeichnet, daß bei einer Schwindung des Kunststofferzeugnisses (20; 50; 90) infolge dessen Abkühlung im Aufnahmeelement die betreffende Kontaktfläche (33; 83) entsprechend der Schwindung nachstellbar ist.

7. Vorrichtung nach Anspruch 6, dadurch gekennzeichnet, daß die Kontaktfläche (33, 34; 83) durch eine Membran (35, 36; 62; 72; 82; 94) gebildet wird, wobei die Membran (35, 36; 62; 72; 82; 94) mittels Fremdkraft auslenkbar ist.

8. Vorrichtung nach Anspruch 7, dadurch gekennzeichnet, daß die Fremdkraft eine mechanische Kraft ist.

9. Vorrichtung nach Anspruch 7, dadurch gekennzeichnet, daß die Fremdkraft eine fluidische Kraft ist.

10. Vorrichtung nach einem oder mehreren der Ansprüche 6 - 9, dadurch gekennzeichnet, daß die Membran (82; 94) zum Erzeugen eines vorgegebenen Profils des Anpreßdrucks am Kunststofferzeugnis (20; 90) über die Kontaktfläche (83) mit einem vorgegebenen Dickenprofil ($d_1$, $d_2$; 96, 97, 100) ausgebildet ist.

11. Vorrichtung nach einem oder mehreren der Ansprüche 7 - 10, dadurch gekennzeichnet, daß die Membran (35, 36; 62; 82; 94) aus Metall besteht.

12. Vorrichtung nach einem oder mehreren der Ansprüche 7 - 10, dadurch gekennzeichnet, daß die Membran (72) aus einem Kunststoff besteht.

13. Vorrichtung nach Anspruch 12, dadurch gekennzeichnet, daß der Kunststoff mit Partikeln eines gut wärmeleitenden Materials versehen ist.

14. Vorrichtung nach einem oder mehreren der Ansprüche 7 - 13, dadurch gekennzeichnet, daß die Membran (35, 36; 62; 72; 82; 94) in gut wärmeleitendem Kontakt mit einem Abschnitt des Aufnahmeelementes von hoher Wärmekapazität steht.

15. Vorrichtung nach einem oder mehreren der Ansprüche 7 - 14, dadurch gekennzeichnet, daß die Membran (82) mit einem Kühlmittel angeströmt wird.

16. Vorrichtung nach einem oder mehreren der Ansprüche 7 - 15, dadurch gekennzeichnet, daß die Membran (94) mit Verstärkungselementen versehen ist.

17. Vorrichtung nach Anspruch 16, dadurch gekennzeichnet, daß die Verstärkungselemente Rippen (97) sind.

18. Vorrichtung nach Anspruch 16 oder 17, dadurch gekennzeichnet, daß die Verstärkungselemente Platten (99) sind.

19. Vorrichtung nach einem oder mehreren der Ansprüche 6 - 18, dadurch gekennzeichnet, daß das Aufnahmeelement ein Greifer (30; 91) zum Entnehmen der Kunststofferzeugnisse (50) aus dem Werkzeug (2) ist.

20. Vorrichtung nach einem oder mehreren der Ansprüche 6 - 18, dadurch gekennzeichnet, daß das Aufnahmeelement eine der Kunststoff-Spritzgießmaschine (1) nachgeschaltete Kühlstation (7) ist.

Fig. 1

$T = T_0$

$H$

$D$

20

13

14

11

10

12

Fig. 2A

6

21

$T = T_0 - \Delta T$

22

$H'$

$D'$

20'

11

10

12

Fig. 2B

Fig. 3A

Fig. 3B

Fig. 4

Fig. 5

Fig. 6

Fig. 7

**EP 0 763 415 A1**

Europäisches Patentamt

# EUROPÄISCHER RECHERCHENBERICHT

Nummer der Anmeldung

EP 96 11 3711

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X | DE-A-44 25 795 (KRUPP MASCHINENTECHNIK) 25.Januar 1996<br><br>* das ganze Dokument *<br>--- | 1,4,6,7, 9,15-17, 19 | B29C45/42<br>B29C45/72 |
| X | FR-A-1 494 151 (PETITCOLLIN-MONVILLE) 8.September 1967<br>* das ganze Dokument *<br>--- | 1,5-7,9, 12,15,20 | |
| A | DE-B-26 10 258 (VOITH FISCHER KUNSTSTOFFTECHNIK) 4.August 1977<br>* das ganze Dokument *<br>--- | 1,5,6,20 | |
| D,A | EP-A-0 266 804 (HUSKY INJECTION MOLDING SYSTEMS) 11.Mai 1988<br>* Ansprüche; Abbildungen 11,12 *<br>----- | 1,5,6,20 | |

| | | | RECHERCHIERTE SACHGEBIETE (Int.Cl.6) |
|---|---|---|---|
| | | | B29C<br>B25B |

Der vorliegende Recherchenbericht wurde für alle Patentansprüche erstellt

| Recherchenort | Abschlußdatum der Recherche | Prüfer |
|---|---|---|
| DEN HAAG | 11.Dezember 1996 | Bollen, J |